Europäisches Patentamt

(19) European Patent Office

Office européen des brevets

(11) Publication number: **0 276 135**
**A2**

(12) # EUROPEAN PATENT APPLICATION

(21) Application number: **88300435.0**

(22) Date of filing: **20.01.88**

(51) Int. Cl.⁴: **G 11 B 7/24**

(30) Priority: **20.01.87 JP 12096/87**

(43) Date of publication of application:
**27.07.88 Bulletin 88/30**

(84) Designated Contracting States: **DE GB**

(71) Applicant: **FUJI PHOTO FILM CO., LTD.**
**210 Nakanuma Minami Ashigara-shi**
**Kanagawa 250-01 (JP)**

(72) Inventor: **Ohara, Shinichiro**
**c/o Fuji Photo Film Co. Ltd. No. 200, Oonakazato**
**Fujinomiya-shi Kanagawa (JP)**

**Kanamori, Katsuyuki**
**c/o Fuji Photo Film Co. Ltd. No. 200, Oonakazato**
**Fujinomiya-shi Kanagawa (JP)**

**Haneda, Norihisa**
**c/o Fuji Photo Film Co. Ltd. No. 200, Oonakazato**
**Fujinomiya-shi Kanagawa (JP)**

(74) Representative: **Arthur, Bryan Edward et al**
**Withers & Rogers 4 Dyer's Buildings Holborn**
**London EC1N 2JT (GB)**

(54) Information recording medium.

(57) An information recording medium comprises a substrate and a recording layer provided thereon, said recording layer containing indium, at least one metal compound selected from the group consisting of a metal sulfide, a metal fluoride and a metal oxide and a metal having a reflectance of not less than 80 % for a light for reproducing information, wherein the metal having a reflectance of not less than 80 % is contained in the recording layer in an amount of 31 - 50 weight % based on the total amount of the recording layer.

EP 0 276 135 A2

**Description**

## INFORMATION RECORDING MEDIUM

### BACKGROUND OF THE INVENTION

#### Field of the invention

This invention relates to an information recording medium of a DRAW (direct read after write) type which is advantageously employable for a compact disc (CD) player system.

#### Description of prior art

Information recording media utilizing a beam of high energy density such as a laser beam have been developed in recent years and are now put into practical use. Such recording medium is generally called "optical disc", and the practical applications thereof have been found, for example, as a video disc and an audio disc as well as a disc memory for a large-capacity computer and a large-capacity static image file. Among these media, a compact disc (referred to as "CD") is now widely used as an audio disc for reproducing a music or the like.

The compact disc generally comprises a disc-shaped transparent substrate of plastic material which has been beforehand provided with pits having information of EFM (Eight to Fourteen Modulation) digital audio signals, a light-reflecting thin film made of $A\ell$, etc. provided on the substrate and a protective film provided on the reflecting thin film. Reading of information from CD is conducted by irradiating CD with a laser beam, and under irradiation the signals of CD format are read out based on the variation of reflectance caused by the presence or absence of the pits.

CD is generally rotated at a fixed linear speed of 1.2 to 1.4 m/sec. according to the predetermined CD standard to record information thereon and CD is required to have the maximum recording time (63 to 74 minutes) under the conditions of a signal-recording area within the region of inner diameter of 45 mm and outer diameter of 116 mm, pit width of 0.8 μm and track pitch of 1.6 μm. The conventional audio compact disc is a disc for only reproducing information which has been beforehand provided with pits on the substrate (and accordingly not provided with a recording layer), so that the compact disc has such problems that information is not recorded or edited therein on a user side. Accordingly, development of a compact disc of DRAW (Direct Read After Write) type (i.e., disc capable of being written) is eagerly desired.

Further, as discs for memorizing various documents, data, static image files, etc., discs of DRAW type for CD-ROM (Read Only Memory) or CD-I (Interactive) are desired.

A known information recording medium of DRAW type basically comprises a disc shaped transparent substrate made of a plastic or glass material and a recording layer composed of a metal or a semi-metal such as Bi, Sn, In or Te which is provided on the substrate. Writing of information on the recording medium (optical disc) can be conducted, for example, by irradiating the medium with a laser beam. Under irradiation with the laser beam, the irradiated area of the recording layer of the optical disc absorbs the energy of beam and a rise of temperature locally occurs and as a result, a chemical and physical change is caused to alter optical characteristics of the recording layer in the irradiated area, whereby recording of information can be made. Reading of information from the optical is also conducted by irradiating the disc with a laser beam. The recorded information can be reproduced by detecting a reflected light or a transmitted light corresponding to the alteration in the optical characteristics of the recording layer.

In such information recording medium of DRAW type, however, information cannot be recorded unless the medium is rotated at a high linear speed to have wide intervals between adjoining pits during the recording procedure, and hence it is impossible to record information thereon according to the CD system in which high density recording is carried out at a low linear speed. Even if the medium would record information thereon, the recorded information could not be read out therefrom by means of a commercially available CD player which is required to use of an optical disc having a high reflectance.

There are known an optical disc having a recording layer composed of a dye or a dye compound provided on a support for recording signals of CD format and a method of recording optical information using said disc, as described in Japanese Patent Provisional Publications No. 61(1986)-237239 and No. 61(9186)-239443.

The present inventors have applied for a patent with respect to an information recording medium of DRAW type comprising a support and a recording layer provided thereon which contains indium, at least one metal compound selected from the group consisting of a metal sulfide, a metal fluoride and a metal oxide, which is characterized in that said recording layer further contains a metal having a surface tension of not less than 600 dyne/cm at a temperature ranging from a melting point of the metal to a temperature higher than the melting point by 300°C (Japanese Patent Application No. 60(1985)-114733 which corresponds to USSN 168,126).

### SUMMARY OF THE INVENTION

It is an object of the present invention to provide an information recording medium of DRAW type advantageously employable a method of optically recording signals of CD format.

It is another object of the invention to provide an information recording medium which is employable for a method of optically recording signals of CD format which is capable of being reproduced by means of a commercially available CD player.

The above objects can be accomplished by an information recording medium of the invention comprising a substrate and a recording layer provided thereon wherein said recording layer contains indium, at least one metal compound selected from the group consisting of a metal sulfide, a metal fluoride and and a metal oxide and a metal having a reflectance of not less than 80 % for a light for reproducing information, and the amount of said metal is in the range of 31 to 50 % by weight based on the total amount of the recording layer.

As a result of studies on methods of optically recording signals of CD format and information recording media therefor, the present inventors have found that the recording of optical information can be made according to the CD system by using at least the above-mentioned indium, metal compound and metal of high-reflectance to form a recording layer of an information recording medium, and accomplished the invention. Since the resulting recording layer has a high reflectance, the recorded signals can be read out by means of a commercially supplied CD player.

Especially when the metal of high reflectance is incorporated into the substrate side of the recording layer at high concentration gradient, the recording or reproduction of information can be carried out with much higher precision.

Further, the information recording medium having a recording layer on a substrate which contains the above-mentioned indium, metal compound and metal of high reflectance, the amount of said metal being in the range of 31 to 50 wt.%, can be recorded with EFM signals at a recording power of not more than 10 mW. Moreover, the recording medium of the invention has a reflectance of not less than 60 % on its plane surface, so that the signals recorded thereon can be read out by means of a commercial CD player. Accordingly, the medium can be employed as a compact disc of DRAW type.

## DETAILED DESCRIPTION OF THE INVENTION

The information recording medium of the present invention can be prepared in the following mannAer.

The substrate material employed in the invention can be selected from any materials which have been employed as the substrates of the conventional recording media. From the viewpoint of optical characteristics, smoothness, workability, handling properties, long-term stability and manufacturing cost, preferable examples of the substrate materials include glasses such as soda-lime glass, acrylic resins such as cell-cast polymethyl methacrylate and injection-molded polymethyl methacrylate; vinyl chloride resins such as polyvinyl chloride and vinyl chloride copolymer; epoxy resins, and polycarbonate resins. Among these materials, polymethyl methacrylate, polycarbonate, epoxy resins and glasses are preferred from the viewpoint of dimensional stability, transparency and smoothness.

The surface of the substrate on which a recording layer is to be placed may be provided with an undercoating layer for the purpose of improving smoothness, adhesion to the recording layer, and preventing the recording layer from denaturation. Examples of materials employable for the preparation of the undercoating layer include polymer materials such as polymethyl methacrylate, acrylic acid-methacrylic acid copolymer, nitrocellulose, polyethylene, polypropylene and polycarbonate; organic materials such as a silane coupling agent; inorganic oxides such as $SiO_2$ and $A\ell_2O_3$; and inorganic fluorides such as $MgF_2$.

When the substrate material is glass, an undercoating layer made of a polymer having a hydrophilic group and/or a maleic anhydride group such as a styrene-maleic anhydride copolymer is preferably provided on the substrate for preventing an adverse effect to the recording layer given by an alkali metal ion and an alkaline earth metal ion having been liberated from the substrate.

The undercoating layer can be formed on the substrate by dissolving or dispersing the above-described material in an appropriate solvent to prepare a coating solution (i.e., dispersion) and then applying the coating solution onto the surface of the substrate by a conventional coating process such as spin coating, dip coating or extrusion coating.

The substrate can be provided with a pre-groove layer for the purpose of forming a tracking groove or protruded and depressed portions for giving information such as address signals. Examples of materials for the preparation of the pre-groove layer include a mixture of at least one monomer (or oligomer) selected from the group consisting of monoester, diester, triester and tetraester of an acrylic acid and a photopolymerization initiator.

The pre-groove layer can be formed on the substrate as follows. In the first place, a mixture of the above-mentioned acrylic acid ester and photopolymerization initiator is coated on a stamper which has been precisely formed, and on the coated layer of the mixture is placed the substrate. Subsequently, the coated layer is irradiated with ultraviolet rays via the substrate or the stamper to cure the liquid phase of the layer so as to fix the substrate with the liquid phase. The substrate is then separated from the stamper to obtain a substrate having a pre-groove layer. The thickness of the pre- groove layer is generally in the range of 0.05 to 100 μm, preferably in the range of 0.1 to 50 μm. In the case of a plastic substrate, the pre-groove layer may be provided directly on the substrate.

A chlorinated polyolefin layer may be further provided on the substrate. By providing the chlorinated polyolefin layer on the substrate, heat energy given under irradiation with a laser beam is prevented from escape from the recording layer to the substrate through heat conduction, and the irradiated portion of the chlorinated polyolefin layer generates a chlorine gas to readily form pits on the recording layer. Hence, errors in the reading procedure (i.e., bit error rate) can be reduced and the recording sensitivity of the resulting medium can be highly enhanced.

The chlorinated polyolefin generally has a chlorination ratio of not less than 30 %, preferably not less than 50 %, more preferably in the range of 50 to 70 %. Particularly preferred chlorinated polyolefins are chlorinated polyethylene and chlorinated polypropylene from the viewpoint of heat stability and solubility.

The chlorinated polyolefin layer can be formed on the substrate by dissolving the above-mentioned chlorinated polyolefin in a solvent to prepare a coating solution, coating the solution on the surface of the substrate, and drying the coated layer.

Examples of the solvents for dissolving the chlorinated polyolefin include toluene, xylene, ethyl acetate, butyl acetate, cellosolve acetate, methyl ethyl ketone, 1,2-dichloroethane, methyl isobutyl ketone, cyclohexanone, cyclohexane, tetrahydrofuran, ethyl ether and dioxane. The coating solution for the chlorinated polyolefin layer may contain other additives such as a plasticizer and a lubricant according to the purpose.

The coating solution can be coated over the surface of the substrate by a conventional process such as spray coating, spin coating, dip coating, roll coating, blade coating, doctor roll coating and screen printing. The thickness of the chlorinated polyolefin layer is generally in the range of 50 to 1,000 angstroms, preferably in the range of 100 to 500 angstroms.

On the substrate (or any layer of the undercoating layer, pre-groove layer and the chlorinated polyolefin layer) is then provided on a recording layer.

As the materials of the recording layer, there can be employed indium having a low-melting point; at least one metal compound selected from the group consisting of a metal sulfide, a metal fluoride and a metal oxide; and a metal having a reflectance of not less than 80 % for a light used for reproduction of information (i.e., reproducing light).

Examples of the metal compounds include metal sulfides such as $CrS$, $Cr_2S$, $Cr_2S_3$, $MoS_2$, $MnS$, $FeS$, $FeS_2$, $CoS$, $Co_2S_3$, $NiS$, $Ni_2S$, $PbS$, $Cu_2S$, $Ag_2S$, $ZnS$, $In_2S_3$, $In_2S_2$, $GeS_x$ ($0.5 < x \leq 2.0$), $SnS$, $SnS_2$, $As_2S_3$, $Sb_2S_3$ and $Bi_2S_3$; metal fluorides such as $MgF_2$, $CaF_2$ and $RhF_3$; and metal oxides such as $MoO$, $In_2O$, $In_2O_3$, $GeO$ and $PbO$.

Examples of the metals having a reflectance of not less than 80 % against a reproducing light include Ag, Aℓ, Cu, Ga and Au. As a laser for reproducing information, a semiconductor laser having the wavelength of 780 nm is generally employed, and the above-mentioned metals in the bulky form show the following reflectance in the wavelength of 780 nm: Ag (98 %), Aℓ (90 %), Cu (98 %), Ga (90 %) and Au (95 %).

The above-mentioned metal also has a high surface tension of not less than 600 dyne/cm at a temperature in the range of its melting point and a temperature of 300°C higher than its melting point. Accordingly, incorporation of said metal and the aforementioned In having a low-melting point and metal compound into the same layer can improve so-called "spreading" during the melting pro cedure of materials of the recording layer owing to the interaction of those materials, whereby pits of favorable shapes can be readily formed on the recording layer. The metal having a high reflectance most preferably is Au, and the recording layer preferably comprises Au, In and GeS.

The recording layer may further contain other low-melting metals such as Te, Sn, Pb and Bi and other metals of high surface tension such as Co, Mo, Ni, Si, V, Be, Cr, Fe, Mn, Nb, Pd, Ti and Zn.

The amount of indium in the recording layer is generally in the range of 30 to 80 % by weight, preferably 30 to 50 % by weight. The amount of the metal compound such as a metal sulfide, a metal fluoride and a metal oxide in the recording layer is generally in the range of 10 to 50 % by weight, preferably 20 to 30 % by weight. The amount of the metal of high reflectance in the recording layer is generally in the range of 31 to 50 % by weight, preferably 35 to 40 % by weight.

Further, the metal of high reflectance is preferably contained in the recording layer in such a manner that the concentration thereof on the support side is higher than that on the opposite side of the support side (i.e., the recording layer-surface side) from the viewpoint of enhancements of the sensitivity in the recording procedure and the precision in the reading procedure. For example, the metal exists in the recording layer with such a concentration gradient that the concentration thereof becomes smaller from the support side towards the recording layer-surface side. The concentration of the metal preferably is in the range of 10 to 100 % by weight on the support side surface of the recording layer.

In the specfication, the concentration of the metal in the recording layer means a ratio of the metal which exists on a cut surface given by cutting the recording layer in parallel with the surface of the recording layer. The recording layer-surface side means a surface of the recording layer not facing the support.

The recording layer can be formed on the substrate by means of vapor deposition, sputtering or ion plating process using the above-mentioned materials. The concentration of the metal of high reflectance can be made higher on the support side, for example, by controlling the electric current for heating which run in an evaporation source of the metal to vary the deposition amount of the metal during the deposition procedure.

The recording layer may be composed of a single layer or plural layers. In any case, the thickness of the recording layer is generally in the range of 300 to 2,000 angstroms, preferably 700 to 1,500 angstroms, from the viewpoint of optical density required for the optical recording.

By incorporating the metal of high reflectance into the support side of the recording layer at a high concentration gradient, pits can be readily formed thereon by means of a laser beam in the recording procedure of information. Accordingly, the output level of a laser beam can be made smaller, and the sensitivity can be improved in the recording procedure. Further, since the obtained pits have favorable shapes, the bit error rate can be reduced in the reading procedure of information.

A thin film of an inorganic material such as silicon dioxide, tin oxide and manganese fluoride or a polymer material such as a thermoplastic resin and a photo-setting resin may be formed on the free surface of the substrate (surface not facing the recording layer) by means of vacuum metallizing, sputtering process or coating process in order to increase resistance to damage and resistance to moisture.

A recording medium of two substrates combined-type can be prepared by combining two substrates having the above-described structure using an adhesive, etc. A recording medium of air-sandwich structure can be prepared by combining two disc-shaped substrates at least one of which having the above-described structure, by interposing therebetween a ring-shaped inner spacer and a ring-shaped outer spacer. In the case of using one substrate having a recording layer thereon, the surface of the recording layer is preferably provided with a disc of film form or a layer of a thermoplastic resin, a photo-setting resin or an inorganic material as a protective layer.

Recording of optical information can be carried out using the above-described recording medium by the following method according to the present invention.

In the first place, the recording medium is irradiated with a light for recording information (i.e., recording light) such as a semiconductor laser beam from the support side under rotation of the medium at a fixed linear speed ranging from 1.2 to 1.4 m/sec. As the recording light, a semiconductor laser beam having the wavelength region of 750 to 850 nm is generally employed. In the invention, information can be recorded at a recording power of not more than 10 mW, and the method has high sensitivity.

Under irradiation with a laser beam as described above, pits of 0.70 to 4.0 $\mu$m are formed on the recording layer at intervals of 0.70 to 4.0 $\mu$m in the form of concentric circle or in the spiral form. Thus, information of EFM signals such as CD format signals are recorded on the recording layer. The recording of signals may be conducted on the grooves or between the grooves. In this method, recording of information for not shorter than 60 minutes is possible by using a medium having an inner diameter of 50 mm and an outer diameter of 115 mm.

In the recording procedure, a tracking control is preferably conducted using a tracking groove.

Reproduction of the recorded information can be carried out by irradiating the medium with a semiconductor laser beam from the substrate side under rotation of the medium at the same linear speed as described above and detecting the reflected light. In the invention, since the plane surface of the recording layer has a high reflectance of not less than 60 %, the recorded information can be sufficiently read out by means of a commercial CD player.

The information recording medium of the invention and a medium for recording signals of CD format such as CD-ROM and CD-I are basically interchangeable with each other.

Example and comparison example of the present invention are given below, but these examples by no means restrict the invention.

### Example 1

Onto a surface of a disc-shaped polycarbonate substrate having tracking grooves thereon (outer diameter: 120 mm, inner diameter: 15 mm, thickness: 1.2 mm; provided with grooves having depth of 0.07 $\mu$m, width of 0.8 $\mu$m and pitch of 1.6 $\mu$m in the spiral form within an area of from inner diameter of 45 mm to outer diameter of 116 mm) was applied a coating solution having the following composition by a spin coating method, and the coated layer was dried to form a chlorinated polyolefin layer having dry thickness of 150 angstroms on the substrate.

Composition of Coating Solution (by weight)
Chlorinated polyethylene $[-(C_2H_{4-y}C\ell_y)_n-,\ y=1.7,\ n=200]$    0.2 part
Methyl ethyl ketone    10 parts
Cyclohexane    100 parts.

On the chlorinated polyolefin layer were vapor-deposited together Au, In and GeS in such a manner that the amounts of Au, In and GeS would be 35 wt.%, 40 wt.% and 25 wt.%, respectively, to form a recording layer of 1,000 angstroms thick. In this deposition procedure, the electric current for heating which run in an evaporation source of Au was controlled to make the concentration of Au higher on the support side and lower on the recording layer-surface side. The concentration of Au on the support side-surface of the obtained recording layer was 80 wt.%.

Thus, an information recording medium comprising a substrate, a chlorinated polyolefin layer and a recording layer, superposed in order, was prepared (Sample A).

### Comparison Example 1

The procedure of Example 1 was repeated except for using Te alone instead of Au, In and GeS, to form a recording layer having the same thickness as that of the recording layer of Example 1 on the substrate.

Thus, an information recording medium comprising a substrate, a chlorinated polyolefin layer and a recording layer, superposed in order, was prepared (Sample B).

### Evaluation of Recording Medium

Each of the recording layers of Sample A and Sample B obtained as above was recorded with standard signals (8.15 Hz) of EFM-CD format at a recording power of 8.0 mW and a fixed linear speed of 1.3 m/sec. using a disc evaluation device (Nakamichi Disc Evaluation Device OMS-1000) and an EFM encorder (KEN-WOOD).

The recorded information was reproduced using a commercially supplied CD player (D-50MKII of Sony Corp.).

As a result, recording of information and reproduction of the recorded information were both made with high precision by the method of the present invention using Sample A according to the CD system. However, only the recording of information was made by the method using Sample B (conventional recording medium), and the reproduction of the recorded information was impossible.

The reason was assumed as follows. The plane surface of the recording layer of Sample B had a reflectance of 45 % at the wavelength of 780 nm, while the plane surface of the recording layer of Sample A had a reflectance of 60 % at the same wavelength, so that the recorded information was unable to be reproduced from Sample B by the use of a commercial CD player which is designed on the premise of a reflectance of 70 to 80 %.

Accordingly, it has been confirmed that the signals of CD format can be not only recorded but also reproduced using an information recording medium of the present invention.

Example 2

The procedure of Example 1 was repeated except that that Au, In and GeS were deposited in such a manner that the amounts of Au, In and GeS would be 40 wt.%, 38 wt.% and 22 wt.%, respectively, to form a recording layer of 1,000 angstroms thick. Thus, an information recording medium comprising a substrate, a chlorinated polyolefin layer and a recording layer, superposed in order, was prepared.

The recording layer of the resulting information recording medium had a reflectance of 62 %.

The information recording medium was evaluated in the same manner as described above. It was confirmed that recording of information and reproduction of the recorded information were both made with high precision.

Comparison Example 2

The procedure of Example 1 was repeated except that that Au, In and GeS were deposited in such a manner that the amounts of Au, In and GeS would be 30 wt.%, 50 wt.% and 40 wt.%, respectively, to form a recording layer of 1,000 angstroms thick. Thus, an information recording medium comprising a substrate, a chlorinated polyolefin layer and a recording layer, superposed in order, was prepared.

The recording layer of the resulting information recording medium had a reflectance of 55 %.

The information recording medium was evaluated in the same manner as described above. It was confirmed that recording of information was made but reproduction of the recorded information could not be done.

Comparison Example 3

The procedure of Example 1 was repeated except that that Au, In and GeS were deposited in such a manner that the amounts of Au, In and GeS would be 55 wt.%, 30 wt.% and 15 wt.%, respectively, to form a recording layer of 1,000 angstroms thick. Thus, an information recording medium comprising a substrate, a chlorinated polyolefin layer and a recording layer, superposed in order, was prepared.

The recording layer of the resulting information recording medium had a reflectance of 65 %.

The information recording medium was evaluated in the same manner as described above. It was confirmed that recording of information could not be made.

**Claims**

1. An information recording medium which comprises a substrate and a recording layer provided thereon, said recording layer containing indium, at least one metal compound selected from the group consisting of a metal sulfide, a metal fluoride and a metal oxide and a metal having a reflectance of not less than 80 % for a light for reproducing information, wherein the metal having a reflectance of not less than 80 % is contained in the recording layer in an amount of 31 - 50 weight % based on the total amount of the recording layer.

2. The information recording medium as claimed in claim 1, wherein said metal compound is GeS and said metal having a reflectance of not less than 80 % is Au.

3. The information recording medium as claimed in claim 1, wherein said metal having a reflectance of not less than 80 % is contained in the recording layer in an amount of 35 - 40 weight % based on the total amount of the recording layer.

4. The information recording medium as claimed in claim 1, wherein the concentration of said metal on a side facing the support is higher than that on a side of an opposite surface of the recording layer.

5. The information recording medium as claimed in claim 1, wherein the concentration of said metal on the surface facing the support is in the range of 10 to 100 % by weight.

6. The information recording medium as claimed in claim 1, wherein a chlorinated polyolefin layer is provided between the substrate and the recording layer.